# EUROPÄISCHE PATENTSCHRIFT

(11) **EP 1 707 464 B1**
(45) Veröffentlichungstag und Bekanntmachung des Hinweises auf die Patenterteilung: **29.06.2011**
(21) Anmeldenummer: 06111375.9
(22) Anmeldetag: 20.03.2006
(51) Int. Cl.: B60T 8/40, B60T 8/42

(54) **Hydraulische Bremsanlage mit Blockierschutzregelung**
Hydraulic brake system with anti-lock control
Système de freinage hydraulique à régulation antiblocage

(30) Priorität: 02.04.2005 DE 102005015158; 02.02.2006 DE 102006004745
(43) Veröffentlichungstag der Anmeldung: 04.10.2006
(73) Patentinhaber: Continental Teves AG & Co. oHG, 60488 Frankfurt am Main (DE)
(72) Erfinder: Kohl, Andreas, 55126, Mainz (DE); Mahlo, Rüdiger, 12623, Berlin (DE)

(56) Entgegenhaltungen:
- EP-A2- 0 418 602
- WO-A-03/082645
- DE-A1- 4 232 614
- DE-A1- 10 057 451
- DE-A1- 10 355 239
- DE-A1- 19 632 311

## Beschreibung

Die Erfindung betrifft eine Hydraulische Bremsanlage mit Blockierschutzregelung.
Eine elektronisch geregelte, hydraulische Bremsanlage umfasst einen Aufnahmekörper sowohl für elektromagnetisch ansteuerbare Ventile, als auch für eine elektromotorisch angetriebene Pumpe, welche im Schlupfregelbetrieb als Rückförderpumpe vorgesehen ist, um Bremsflüssigkeit die aus Radbremsen in einen oder mehrere Niederdruckspeicher abgelassen wird, in Richtung Hauptzylinder (THZ) zurück zu fördern. Des Weiteren ist eine elektronische Steuereinheit (ECU) vorgesehen, die zur Energieversorgung mit einem Bordnetz, und zur Kommunikation mit einem elektronischen Bus-System verbunden ist. Weiterhin ist die elektronische Steuereinheit mit Ventilspulen, mit Raddrehsensoren sowie mit einem drehzahlveränderbaren Elektromotor zum Antrieb der Pumpe elektrisch verbunden.

Im Schlupfregelbetrieb werden die Ventile in Abhängigkeit von dem herrschenden Radschlupf derart zeitlich limitiert angesteuert, dass Druckabbau-, Druckhalte- und Druckaufbauzustände in den Radbremsen hervorgerufen werden können. Dies bezeichnet man kurz als Druckmodulation. Zum Druckabbau wird das jeweilige Auslassventil einer Radbremse beispielsweise geöffnet, so dass das abgelassene Druckmittelvolumen zeitweilig in einen Niederdruckspeicher gelangen kann. Damit das Bremspedal in der eingesteuerten Position verharrt, und nicht durch das abgelassene Volumen schlagartig in Richtung Bodenblech abfällt, dient die Rückförderpumpe dazu, das Druckmittelvolumen, welches aus Radbremsen in den Niederdruckspeicher abgelassen worden ist, zurück in Richtung Hauptbremszylinder zu drängen. Diesen Vorgang erkennt der Fahrzeugführer vielfach durch Pedalvibrationen und durch Laufgeräusche des elektrischen Motors, wie auch durch Laufgeräusche der Pumpe. Ferner gehören Druckstöße infolge abrupter Ventilöffnungs- und Ventilschließvorgänge üblicherweise zu dem genannten Repertoire.

Aus der EP 0 577 609 B1 ist es bereits bekannt, einen Elektromotor zum Antrieb von einer Rückförderpumpe mit begrenzter Leistung anzusteuern. Nach der DE 43 03 206 C2 wird vorgeschlagen, die Förderleistung einer rückfördernden Hydraulikpumpe in Abhängigkeit von einem abgeschätzten Vordruck im Bremssystem einzustellen. Zu diesem Zweck ist eine Voreinstellung der Drehzahl des elektrischen Antriebs möglich. Um den Vordruck im Bremssystem nicht gesondert mittels Drucksensoren messen zu müssen, erfolgt eine Vordruckabschätzung mit Hilfe von einem Generatorbetrieb des Elektromotors. Für die Vordruck-Abschätzung wird der Elektromotor prinzipiell gepulst angesteuert, und zwischen Ansteuerungspulsen wird kurzzeitig in den Generatorbetrieb umgeschaltet, um über die Generatorspannung sowie deren Abklingverhalten auf die tatsächliche Motordrehzahl und die Vordruckbelastung zu schließen. Dadurch erhält man eine Information über die tatsächlich abgegriffene Leistung. In Abhängigkeit von dem derart abgeschätzten Vordruck wird die Drehzahl des Elektromotors eingestellt.

Aus anderen Schriften ist es bekannt, die Drehzahl eines ABS-Pumpenmotors zwecks Geräuschreduzierung mittels eines geschlossenen Regelkreises zu regeln. Der Regelkreis erfordert einen Drehzahlsensor für die Ermittlung der Motordrehzahl. Dies verursacht zusätzliche Investitionsmaßnahmen, die nicht immer realisierbar sind.

Aus der EP 0 418 602 A2 ist bekannt, bei hohem Füllungsgrad des Druckmittelspeichers den elektrischen Antriebsmotor einer als Konstantpumpe ausgebildeten Rückförderpumpe mit erhöhter Drehzahl zu betreiben.

In der DE 42 32 614 A1 ist gezeigt, dass die Drehzahl einer Hydraulikpumpe zur Rückförderung des in den Bremsdruckabbauphasen aus den Radbremsen abfließenden Druckmittels in Abhängigkeit von der benötigten Förderleistung variiert wird, wobei diese aus den Ausgangssignalen eines Wegsensors ermittelt wird, der Aufschluss über den momentanen Speicherinhalt des Niederdruckspeichers gibt.

Die DE 196 32 311 A1 bildet den Füllstand des Niederdruckspeichers durch ein theoretisch errechnetes Volumenmodell nach und gibt die Drehzahl einer Hydraulikpumpe vor, die erforderlich ist, um den Niederdruckspeicher in der Zeitspanne zwischen zwei aufeinanderfolgenden Bremsdruckabbauphasen mit hoher Sicherheit zu entleeren.

Es ist eine Aufgabe der vorliegenden Erfindung, die Pumpenaktuatorik bei einem elektrohydraulischen Bremssystem verfeinert abzustimmen, um unkomfortable Bremspedalrückwirkungen und unnötige Geräuschbelästigungen im ABS-Rückfördermodus zu reduzieren.

Die Erfindung beruht auf dem Grundgedanken, die Einstellung oder Einregelung der Soll-Motordrehzahl auf Grundlage eines Kennfeldes vorzunehmen, in das die Parameter Fahrervordruck und Füllungsgrad des Niederdruckspeichers als Eingangsgrößen gemeinsam eingehen. Das Kennfeld ist mathematisch-parametrisiert in Gestalt einer Matrix in dem elektronischen Regler ablegbar. Dadurch wird eine adaptive Pumpenansteuerung ermöglicht, indem adaptiv - also in Abhängigkeit von den herrschenden Randbedingungen und Erfordernissen eine schnelle oder eine langsame Entleerung des Niederdruckspeichers ermöglicht wird. Dabei ist vorgesehen, den Elektromotor mit hoher oder mit niedriger Drehzahl in Betrieb zu nehmen. Mit anderen Worten wird es ermöglicht, zu vorbestimmten Situationen von einer besonders schnellen Entleerung eines Niederdruckspeichers Abstand zu nehmen. Die geänderte Pumpstrategie wird gewählt, wenn dies durch das leerzufördernde Niederdruckspeichervolumen indiziert wird.

Durch die Erfindung wird es ermöglicht, ein temporäres Überdrehen der Pumpe und unkomfortable Pedalrückwirkungen infolge diskontinuierlicher Rückförderung zu vermeiden. Mit anderen Worten wird die Förderwirkung in Abhängigkeit von den oben genannten Einflussgrößen stetig ausgeführt, und folglich der Komfort im Pumpenbetrieb verbessert.

Der Füllungsgrad des Niederdruckspeichers kann unmittelbar gemessen oder anhand anderer Randbedingungen bestimmt - mit anderen Worten geschätzt - werden. Als Basis für die Schätzung wird das Muster der Magnetventilbetätigungen, beispielsweise in Hinblick auf Ventilbetätigungszeiten, wie insbesondere Ventilbestromungszeiten und/oder PWM-Modulationsmuster empfohlen, soweit analogisiert regelbare Schaltventile zum Einsatz kommen.

Das Kennfeld mit den oben genannten Randbedingungen Fahrervordruck (P_thx) und Füllungsgrad (NDS_V_thy) kann wie folgt formuliert werden. Die Motor-Solldrehzahl ist durch die Pumpenspannung (RPS = Requested Pump Speed) wiedergegeben:

**Tabelle1: Angeforderte Pumpendrehzahl (RPS) in Abhängigkeit von THZ- Druck (p) und Niederdruckspeichervolumen (NDS_V)**

| **P / V** | **NDS_V_th₁ (min)** | **NDS_V_th₂** | **NDS_V_th₃ (max** |
|---|---|---|---|
| **p_th₁ (min)** | RPSₘᵢₙ | RPS₁₂ | RPS₁₃ |
| **p_th₂** | RPS₂₁ | RPS₂₂ | RPS₂₃ |
| **p_th₃ (max)** | RPS₃₁ | RPS₃₂ | RPSₘₐₓ |

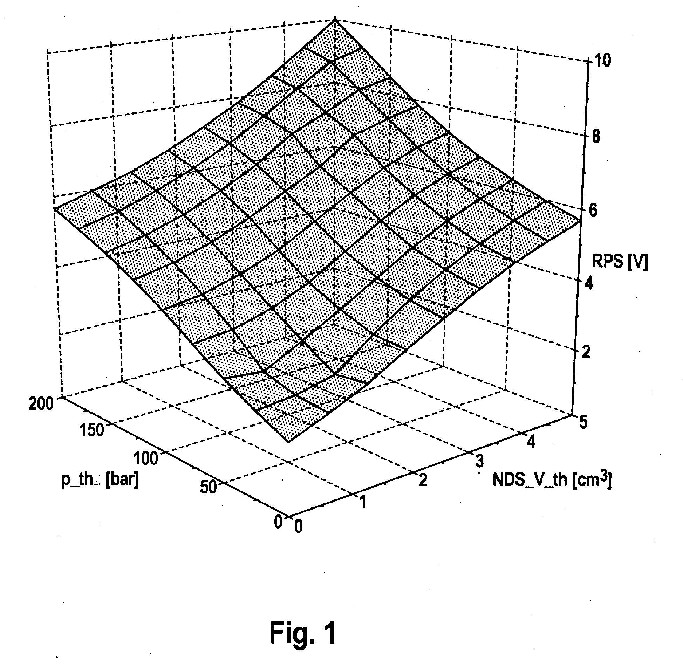

In der Fig. 1 ist ein Kennfeld gemäß Tabelle 1 grafisch verdeutlicht. Die dementsprechend angeforderte Motordrehzahl ist als schräg im Koordinatenraum angeordnete Fläche verdeutlicht. Dabei ist die einzusteuernde Motordrehzahl - entsprechend den Ergebnissen der Eingangsgrößen - in 5 unterschiedliche Drehzahlbereiche aufgeteilt.

Fig. 2 beschreibt den Aufbau und die Verschaltung des hydraulischen Bremssystems am vereinfachten Beispiel von nur einem Bremskreis mit lediglich einer Radbremse.

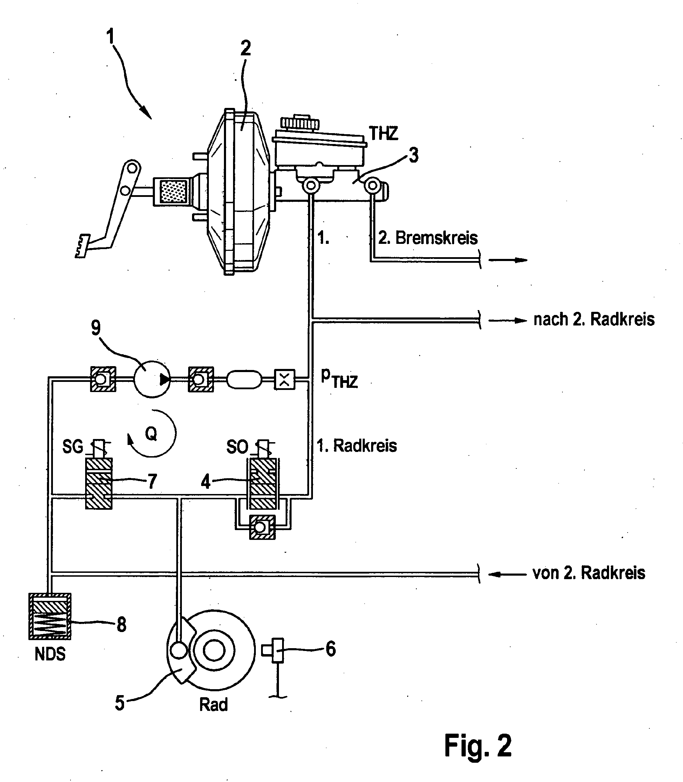

Bezugnehmend auf Fig. 2 ist eine Betätigungseinheit 1 mit einem Bremskraftverstärker 2 und mit einem Hauptzylinder 3, THZ vorgesehen, welcher mit seinem Druckraum über ein stromlos geöffnetes Einlassventil 4 (SO) hydraulisch an eine Radbremse 5 angeschlossen ist. Der elektronische Regler ist nicht verdeutlicht. Zur Erfassung des Druckes PTHZ in der Druckkammer (Vordruck) des Hauptzylinders 3, kann ein Drucksensor vorgesehen sein. Durch die Betätigungseinheit 1 wird es ermöglicht, zwecks Bremsung in der Radbremse 5 einen Druck aufzubauen. Das Raddrehverhalten wird durch einen symbolisch verdeutlichten Radsensor 6 erfasst. Auf einer Auslassseite verfügt die Radbremse 5 über ein stromlos geschlossenes Auslassventil 7 (SG), welches mit einem Niederdruckspeicher 8 (NDS) verbunden ist. An den Niederdruckspeicher 8 schließt sich eine Saugseite einer elektromotorisch angetriebenen Hydraulikpumpe 9 an, deren Druckseite mit einem Hydraulikkanal verbunden ist, welcher den Hauptzylinder 3 mit der Radbremse 5 verbindet.

Die Anordnung ermöglicht eine Druckmodulation, indem beispielsweise das Einlassventil 4 geschlossen, und das Auslassventil 7 geöffnet wird, und hydraulischer Druck aus der Radbremse 5 abgelassen wird, indem Druckmittel in den Niederdruckspeicher 8 einströmen kann.

Das abgelassene Druckmittel wird durch die Hydraulikpumpe 9 wieder in Richtung Hauptzylinder 3, vor die Radbremse 5 gefördert. Dadurch wird ein Absinken des Bremspedals und eine Erschöpfung des Druckmittels verhindert (geschlossenes System). Es versteht sich, dass in dem gezeichneten Kreis grundsätzlich eine weitere Radbremse vorgesehen ist, und dass ein zweiter Bremskreis mit zwei Radbremsen vorliegt.

Bei dem Bremssystem wird die Solldrehzahl des Elektromotors in Abhängigkeit von dem Füllungsgrad in dem wenigstens einen Niederdruckspeicher 8 eingestellt oder geregelt. Zu diesem Zweck wird der Füllungsgrad in dem Niederdruckspeicher 8 direkt gemessen - beispielsweise mit Hilfe von einem Sensor, wie insbesondere einem Wegsensor am Niederdruckspeicher 8. Ausgangsignale des Sensor werden dem elektronischen Regler beispielsweise drahtgebunden oder drahtlos zugeführt.

Gemäß einer anderen Variante der vorliegenden Erfindung wird der Füllungsgrad des Niederdruckspeichers 8 ermittelt - mit anderen Worten abgeschätzt. Dies erfolgt mit Hilfe von dem elektronischen Regler anhand der Ventilbetätigungsmuster, die dieser zwecks Betätigung der Ventile 4,7 emittiert. Mit anderen Worten werden die die Ventilbetätigungsmuster beobachtet und bewertet und anhand dieser Erkenntnisse werden Rückschlüsse darüber geschlossen, wie groß das Volumen in dem Niederdruckspeicher 8 ist. Dieser gemessene oder ermittelte Füllungsgrad des Niederdruckspeichers 8 dient zur Einstellung oder Regelung der Solldrehzahl des Elektromotors. Der Komfort wird verbessert, wenn der Füllungsgrad des Niederdruckspeichers 8 zwecks Aktualisierung während einer Schlupfregelung periodisch neu gemessen oder bestimmt wird, und in dem elektronischen Regler verarbeitet wird.

Eine weitere Steigerung von Präzision und Komfort wird erzielt, wenn zusätzlich der Fahrervordruck p_thx als Kriterium für die Solldrehzahl des Elektromotors herangezogen wird. Der Fahrervordruck kann entweder mit Hilfe von einem Drucksensor direkt erfasst, oder aber auf Basis von einem Modell abgeschätzt werden.

Zusammen mit diesen Informationen wird eine kennfeldartige Steuerung oder Regelung der Motor-Solldrehzahl (Requested Pump Speed RPS) in Abhängigkeit von Fahrervordruck (P_thx) und Füllungsgrad des Niederdruckspeichers NDS_V_thy ermöglicht.

Dadurch wird es ermöglicht, die Hydraulikpumpe 9 bedarfsgerecht anzutreiben. Ein temporäres Überdrehen der Hydraulikpumpe 9 - wie es bei Bremsanlagen nach dem Stand der Technik zu verzeichnen ist - wird vermieden. Durch die angepasste, mit anderen Worten vergleichmäßigte Förderleistung der Hydraulikpumpe 9 wird die Genauigkeit von abgeleiteten Modellen (Niederdruckspeichermodell), die auf das Förderverhalten zurück greifen, verbessert.

## Patentansprüche

1. Hydraulische Bremsanlage mit Blockierschutzregelung, mit einem drehzahlveränderlichen Elektromotor zum Antrieb einer Hydraulikpumpe (9) zur Leerförderung eines oder mehrerer Niederdruckspeicher (8), welcher geeignet ist, aus Radbremsen (5) abgelassenes Druckmittel temporär während einer schlupfgeregelten Bremsung aufzunehmen, umfassend einen elektronischen Regler und Elektromagnetventile (4,7) zur radindividuellen Modulation des Bremsdruckes in den Radbremsen (5) der schlupfgeregelten Räder in Abhängigkeit von dem Raddrehverhalten, wobei der elektronische Regler ein Modul aufweist, das zur Drehzahlveränderung des Elektromotors vorgesehen ist, und wobei die Solldrehzahl des Elektromotors nach Art eines Kennfeldes in Abhängigkeit von einem Füllungsgrad (NDS_V_thy) des wenigstens einen Niederdruckspeichers (8) und in Abhängigkeit von einem Fahrervordruck (P_thx), der in einer Druckkammer von einem Hauptzylinder (3) durch einen Drucksensor erfasst wird, eingestellt oder geregelt wird.

2. Hydraulische Bremsanlage nach Anspruch 1, **dadurch gekennzeichnet, dass** der Füllungsgrad (NDS_V_thy) des Niederdruckspeichers (8) gemessen wird.

3. Hydraulische Bremsanlage nach Anspruch 2, **dadurch gekennzeichnet, dass** zur Messung des Füllungsgrades (NDS_V_thy) an dem Niederdruckspeicher (8) ein Sensor vorgesehen ist, und dass Ausgangssignale des Sensors dem elektronischen Regler zugeführt werden.

4. Hydraulische Bremsanlage nach Anspruch 1, **dadurch gekennzeichnet, dass** der Füllungsgrad (NDS_V_thy) des Niederdruckspeichers (8) durch den elektronischen Regler ermittelt wird, indem im elektronischen Regler eine Rechenvorschrift hinterlegt ist, auf deren Basis ausgehend von Elektromagnetventilbetätigungen während einer Schlupfregelung eine Abschätzung des Füllungsgrades (NDS_V_thy) eines Niederdruckspeichers (8) vorgenommen wird, und dass die Solldrehzahl des Elektromotors in Abhängigkeit von dem abgeschätzten Füllungsgrad (NDS_V_thy) des wenigstens einen Niederdruckspeichers (8) eingestellt oder geregelt wird.

5. Hydraulische Bremsanlage nach Anspruch 4, **dadurch gekennzeichnet, dass** der Füllungsgrad (NDS_V_thy) des Niederdruckspeichers (8) während einer Schlupfregelung periodisch aktualisiert wird, und dass der aktualisierte Füllungsgrad (NDS_V_thy) in dem elektronischen Regler verarbeitet wird.

## Claims

1. Hydraulic brake system with anti-lock control, having an electric motor which has a variable rotational speed and has the purpose of driving a hydraulic pump (9) for emptying one or more low-pressure accumulators (8), which electric motor is suitable for temporarily taking up, during a slip-controlled braking operation, pressure medium which has been discharged from wheel brakes (5), comprising an electronic regulator and solenoid valves (4, 7) for wheel-specific modulation of the brake pressure in the wheel brakes (5) of the slip-controlled wheels as a function of the rotational behaviour of the wheels, wherein the electronic regulator has a module which is provided for changing the rotational speed of the electric motor, and wherein the setpoint rotational speed of the electric motor is set or regulated in the manner of a characteristic diagram as a function of a degree of filling (NDS_V_thy) of the at least one low-pressure accumulator (8) and as a function of a driver admission pressure (P_thx) which is detected in a pressure chamber of a master cylinder (3) by means of a pressure sensor.

2. Hydraulic brake system according to Claim 1, **characterized in that** the degree of filling (NDS_V_thy) of the low-pressure accumulator (8) is measured.

3. Hydraulic brake system according to Claim 2, **characterized in that** a sensor is provided for measuring the degree of filling (NDS_V_thy) at the low-pressure accumulator (8), and **in that** output signals of the sensor are fed to the electronic regulator.

4. Hydraulic brake system according to Claim 1, **characterized in that** the degree of filling (NDS_V_thy) of the low-pressure accumulator (8) is determined by means of the electronic regulator by virtue of the fact that a computing rule is stored in the electronic regulator and is used as the basis for performing an estimation of the degree of filling (NDS_V_thy) of a low-pressure accumulator (8) starting from solenoid valve activations during a slip control process, and **in that** the setpoint rotational speed of the electric motor is set or regulated as a function of the estimated degree of filling (NDS_V_thy) of the at least one low-pressure accumulator (8).

5. Hydraulic brake system according to Claim 4, **characterized in that** the degree of filling (NDS_V_thy) of the low-pressure accumulator (8) is periodically updated during a slip control process, and **in that** the updated degree of filling (NDS_V_thy) is processed in the electronic regulator.

## Revendications

1. Équipement de freinage hydraulique avec régulateur de protection antiblocage, comprenant un moteur électrique à vitesse variable pour entraîner une pompe hydraulique (9) en vue de vidanger un ou plusieurs accumulateurs à basse pression (8), lesquels sont conçus pour absorber temporairement le fluide de pression qui s'échappe des freins de roue (5) pendant un freinage à patinage régulé, comprenant un régulateur électronique et des électrovannes (4, 7) pour la modulation individuelle par roue de la pression de freinage dans les freins de roue (5) des roues à patinage régulé en fonction du comportement des roues, le régulateur électronique présentant un module qui est prévu pour modifier la vitesse de rotation du moteur électrique et la vitesse de rotation de consigne du moteur électrique étant réglée ou régulée sous la forme d'un diagramme caractéristique en fonction d'un taux de remplissage (NDS_V_thy) de l'au moins un accumulateur à basse pression (8) et en fonction d'une pression d'alimentation du conducteur (P_thx) qui est détectée par le biais d'un capteur de pression dans une chambre de pression par un maître cylindre (3).

2. Équipement de freinage hydraulique selon la revendication 1, **caractérisé en ce que** le taux de remplissage (NDS_V_thy) de l'accumulateur à basse pression (8) est mesuré.

3. Équipement de freinage hydraulique selon la revendication 2, **caractérisé en ce qu'**un capteur est prévu sur l'accumulateur à basse pression (8) pour mesurer le taux de remplissage (NDS_V_thy) et **en ce que** les signaux de sortie du capteur sont acheminés au régulateur électronique.

4. Équipement de freinage hydraulique selon la revendication 1, **caractérisé en ce que** le taux de remplissage (NDS_V_thy) de l'accumulateur à basse pression (8) est déterminé par le régulateur électronique, **en ce qu'**une règle de calcul est enregistrée dans le régulateur électronique, règle sur la base de laquelle est effectuée une estimation du taux de remplissage (NDS_V_thy) d'un accumulateur à basse pression (8) à partir des actionnements des électrovannes pendant un patinage régulé, et **en ce que** la vitesse de rotation de consigne du moteur électrique est réglée ou régulée en fonction du taux de remplissage (NDS_V_thy) estimé de l'au moins un accumulateur à basse pression (8).

5. Équipement de freinage hydraulique selon la revendication 4, **caractérisé en ce que** le taux de remplissage (NDS_V_thy) de l'accumulateur à basse pression (8) est actualisé périodiquement pendant un patinage régulé et **en ce que** le taux de remplissage (NDS_V_thy) actualisé est traité dans le régulateur électronique.
